# FASCICULE DE BREVET EUROPEEN

(11) **EP 0 552 663 B1**
(45) Date de publication et mention de la délivrance du brevet: **28.08.1996**
(21) Numéro de dépôt: 93100435.2
(22) Date de dépôt: 14.01.1993
(51) Int. Cl.: B28D 5/04, B23D 59/00, B23D 57/00, B23Q 15/18

(54) **Dispositif pour le contrôle de la géométrie de coupe de tranches fines obtenues par sciage par fil**
Vorrichtung zur Regelung der Geometrie dünner mit einer Drahtsäge geschnitttener Scheiben
Device for controlling the geometry of thin plates cut by means of a wire saw

(30) Priorité: 22.01.1992 CH 170/92
(43) Date de publication de la demande: 28.07.1993
(73) Titulaire: HAUSER, Charles, CH-1261 Genolier (CH)
(72) Inventeur: HAUSER, Charles, CH-1261 Genolier (CH)
(74) Mandataire: Micheli & Cie

(56) Documents cités:
- GB-A- 2 150 715
- PATENT ABSTRACTS OF JAPAN vol. 013, no. 458 (M-880)17 Octobre 1989 & JP-A-1 177 963
- PATENT ABSTRACTS OF JAPAN vol. 7, no. 254 (M-255)(1399) 11 Novembre 1983 & JP-A-58 137 565
- PATENT ABSTRACTS OF JAPAN vol. 12, no. 126 (M-687)(2973) 19 Avril 1988 & JP-A-62 251 963

## Description

La présente invention se rapporte à un dispositif de sciage par fil selon la préambule de la revendication 1.

On connaît déjà de tels dispositifs de sciage, par exemple du document JP-A-1177963 dans lesquels la zone de sciage est constituée par un ensemble de cylindres placés parallèlement. Ces cylindres appelés guide-fils sont gravés avec des gorges qui définissent l'intervalle entre les fils de la nappe, soit l'épaisseur des pièces à scier.

Lors de la rotation d'un élément mécanique, la température de travail dudit élément peut ne pas être constante, mais varier au cours du temps suivant le travail demandé et en raison de frottements et de chaleur générés dans les paliers ou les pièces environnantes. Si la position de cet élément est critique vis-à-vis du travail demandé, non seulement la température propre de l'élément sera importante, mais les variations de l'entourage joueront également un rôle sur sa position spatiale. Ces variations de température provoquent donc une dilatation thermique qui, dans certains cas, peut influencer le résultat des opérations à effectuer. Il s'avérera alors nécessaire de compenser cette dilatation par un contrôle de sa position réalisé par un système de compensation qui peut être thermique, mécanique, hydraulique, pneumatique ou autre.

Toutefois, en raison de la complexité du système environnant, un strict contrôle de la température de l'élément critique peut ne pas être suffisant; un contrôle de la position de l'élément peut s'avérer alors nécessaire. Ce type de contrôle est d'autant plus nécessaire que la précision du positionnement est grande ou que la dimension de l'élément est importante.

Des dispositifs de contrôle de température sont déjà connus spécialement dans l'usinage de pièces de haute précision ou de positionnement en robotique où l'on utilise soit une douche, soit une circulation interne. Toutefois, ceux-ci font appel à des systèmes de refroidissement basés sur un contrôle de la température du fluide et non sur un système faisant appel à la mesure de la position pour réguler la température. Un tel système peut être appliqué sur des éléments de guidage, cylindres en rotation, ayant au moins un point fixe, par exemple un palier.

Des dispositifs de sciage par fil du type précité sont déjà utilisés spécialement dans l'industrie des composants électroniques, des ferrites, des quartz et silices, pour l'obtention en tranches fines de matériaux tels que le silicium poly- ou monocristallin) ou les nouveaux matériaux comme GaAs, InP, GGG, ou également le quartz, le saphir synthétique, voire la céramique. Le prix élevé de ces matériaux rend le sciage par fil plus attractif comparativement à d'autres techniques comme le sciage par disque diamanté.

La précision des pièces à scier, très importante pour des applications électroniques, dépend de la position des fils au cours du sciage, donc de la position des guide-fils par rapport à la pièce à scier. Cette position sera fonction de la température des guide-fils et de leur environnement.

Cette technique de sciage requiert donc un contrôle parfait de la position des guide-fils par rapport à la pièce à scier. En effet, un mouvement même lent résultera en ondulations ou voilage des tranches à scier. Dans le document précité JP-A-1177963, le dispositif de détection de la position transversale relative des cylindres guide-fils et de la pièce à scier commande un système mécanique pour modifier le cas échéant cette position. Dans ce cas, la modification de la position n'est donc effectuée que pour l'ensemble des cylindres guide-fils et par là des fils formant la nappe, et ce système ne permet donc pas de compenser les effets de la dilatation due à une modification de la température des éléments constitutifs du dispositif, effets qui influencent également notamment l'espace entre les gorges des cylindres et donc entre les fils constituant la nappe.

Les exigences des applications en électronique, par exemple liées aux dimensions grandissantes des lingots, nécessitent que même de petites variations doivent être évitées. Il ne suffira donc plus de contrôler seulement la température d'un éventuel liquide de refroidissement, mais de contrôler la position des guide-fils en elle-même ou leur température. De plus, les roulements supportant les guide-fils fortement chargés génèrent de la chaleur qui, additionnée à l'énergie produite au cours du sciage en diffusant dans les parties avoisinantes, contribue à l'imprécision de la découpe.

Le but de l'invention consiste par conséquent à remédier aux inconvénients précités des dispositifs connus, en fournissant un dispositif de sciage du type mentionné ci-dessus, qui permette le contrôle de la position des guide-fils en mesurant celle-ci en continu au moyen d'un système de détection coopérant avec un dispositif de compensation, pour maintenir fixe la position des guide-fils, et des fils formant la nappe par rapport à la pièce à scier.

Le dispositif de sciage, objet de la présente invention, visant à atteindre le but précité, comporte des moyens de contrôle de la température desdits cylindres et/ou dudit support, ces moyens de contrôle coopérant avec lesdits moyens de détection, de manière à maintenir constante par compensation thermique la position relative des cylindres guide-fils et de la pièce à scier.

Les dessins annexés illustrent l'invention schématiquement et à titre d'exemple.

La figure 1 est une vue schématique en perspective du principe de base d'un dispositif de sciage par fil.

La figure 2 est une vue en coupe d'un cylindre guide-fils utilisé comme dans le dispositif de sciage par fil selon l'invention.

La figure 3 est un schéma illustrant une variante du dispositif de sciage par fil selon l'invention.

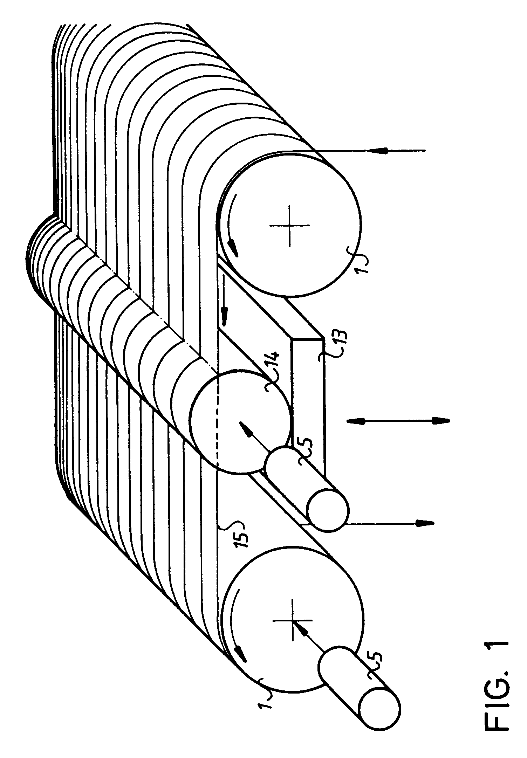

Comme illustré sur la figure 1, la pièce à scier 14 est mise en appui contre la nappe de fils 15 par la table-support 13 sur laquelle elle est fixée. Un détecteur de position 5 est disposé par exemple contre la pièce à scier 14, ou contre la surface libre d'un cylindre guide-fils 1, ce dernier supportant les fils formant la nappe 15.

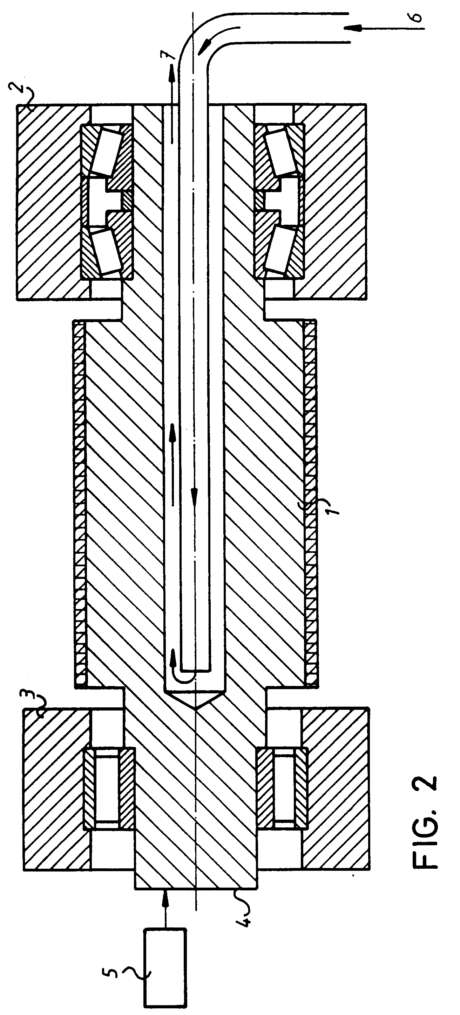

La figure 2 représente une coupe schématique d'un cylindre guide-fils 1, dont la position est maintenue par un palier fixe 2 et un palier libre 3. La mesure de la position est effectuée du côté du palier libre 3, sur une surface libre 4 au moyen d'un détecteur de position 5. Le cylindre 1 comporte un circuit interne de fluide régulateur de température, avec une entrée 6 et une sortie 7. Le détecteur de positon 5 agira donc sur le débit et/ou la température du fluide régulateur de température pour compenser toute modification détectée de la position du cylindre guide-fil 1.

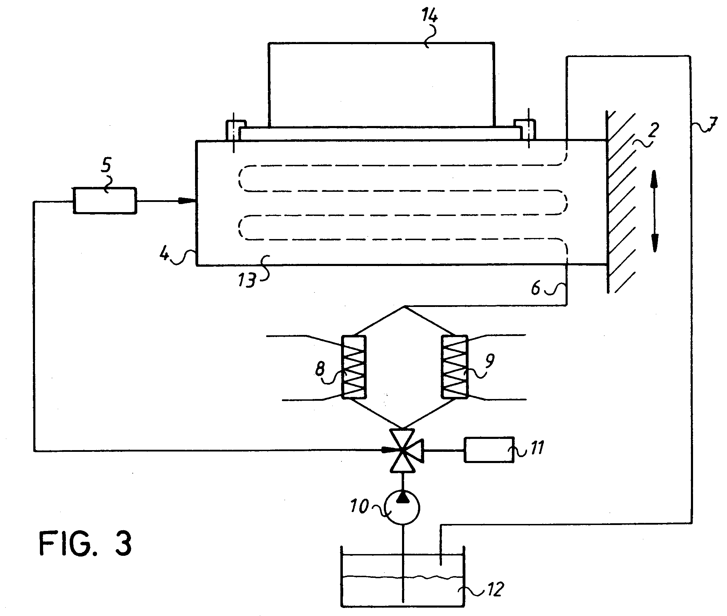

Sur la figure 3 est illustrée schématiquement une variante, dans laquelle l'élément à positionner est la table-support 13 de la pièce 14 à scier. La table présente un encastrement 2 pouvant se déplacer verticalement et un côté libre avec une surface libre 4 au droit de laquelle vient mesurer un détecteur de position 5 sans contact. Ce dernier va commander une vanne motorisée à trois voies 1 qui dirigera le fluide de régulation, soit sur un échauffeur 8, soit sur un refroidisseur 9. La circulation est assurée par la pompe 10 et un réservoir 12 sert de volume tampon.

Le fil de sciage formant la nappe tendue par les guide-fils est généralement constitué d'acier à ressort d'un diamètre compris entre 0,1 et 0,2 mm, afin de scier des blocs de matériaux durs ou exotiques (tels que silicium, céramique, composés III-VI, GGG, saphir, etc.) en tranches de 0,1 à 5 mm d'épaisseur environ. Le dispositif décrit dans la présente invention permet donc, grâce à un système de compensation thermique, de découper les tranches desdits matériaux avec la grande précision requise par les utilisateurs.

En ce qui concerne le détecteur 5, il peut être constitué par un élément de mesure de proximité par effet capacitif ou inductif, ou bien un élément de détection par ultrasons ou optique, ou encore un palpeur mécanique.

## Revendications

1. Dispositif de sciage par fil comprenant une nappe de fils (15) supportée par des cylindres guide-fils (1) et susceptible de se déplacer selon un mouvement continu ou alternatif en appui contre une pièce à scier (14) portée par un support (4), ainsi que des moyens de détection (5) de la position transversale relative desdits cylindres par rapport à ladite pièce à scier, et des moyens de contrôle desdits cylindres (1) et/ou dudit support (4), ces moyens de contrôle coopérant avec lesdits moyens de détection (5), de manière à maintenir constante par compensation la position relative des cylindres guide-fils et de la pièce à scier, caractérisé en ce que les moyens de contrôle agissent thermiquement sur lesdits cylindres et/ou ledit support en définissant leur/sa température.

2. Dispositif de sciage selon la revendication 1, caractérisé en ce chaque cylindre guide-fils (1) est monté d'un côté sur un palier fixe transversalement par rapport à la pièce à scier, par le fait que les moyens de détection (5) coopèrent avec l'autre palier libre dudit cylindre, et par le fait que les moyens de contrôle de la température sont constitués par un circuit de circulation d'un fluide thermorégulateur à l'intérieur de chaque cylindre (1) asservi auxdits moyens de détection.

3. Dispositif de sciage selon la revendication 1, caractérisé en ce que les moyens de détection (5) coopèrent avec une extrémité libre transversalement du support (4) de la pièce à scier (14), et par le fait que ce support comporte un circuit de circulation interne d'un fluide thermorégulateur formant lesdits moyens de contrôle de la température et asservi auxdits moyens de détection.

4. Dispositif selon l'une des revendications 1 à 3, caractérisé en ce que les moyens de détection (5) sont des éléments de mesure de proximité par effet capacitif ou inductif, des éléments de détection optique ou par ultrasons, ou des palpeurs mécaniques.

## Claims

1. A cutting device with wires, including a series of wires (15) supported by wire guiding cylinders (1) and capable of a continuous or alternating motion while being pressed against a work piece (14) to be sawn and carried by a support (4), as well as detection means (5) of the relative transverse position of said cylinders with respect to said part to be cut, and control means for said cylinders (1) and/or said support (4), these control means cooperating with said detection means (5) in such a manner as to maintain constant by compensation the relative position of the wire guiding cylinders and of the work piece to be cut, characterized in that the control means act thermally on said cylinders and/or said support while defining their or its temperature.

2. A cutting device according to claim 1, characterized in that each wire guiding cylinder (1) is mounted on one side of a bearing fixed transversally with respect to the work piece to be cut, in that detection means (5) cooperate with the other free bearing of said cylinder and in that control means for the temperature are provided by a circulation circuit for a thermoregulating fluid inside each cylinder (1) controlled by said detection means.

3. A cutting device according to claim 1, characterized in that the detection means (5) cooperate with a transversally free end of the support (4) of the part to be cut (14) and in that this support includes an internal circulation circuit of a thermoregulating fluid forming said means for controlling the temperature and controlled by said detection means.

4. A device according to one of claims 1 to 3, characterized in that detection means (5) are proximity measuring members, operating by a capacitive or an inductive effect, optical or ultrasound detection members or mechanical feelers.

## Patentansprüche

1. Vorrichtung zum Sägen mittels Drähten, mit einer Schicht von Drähten (15), die von Drahtführungszylindern (1) getragen wird und befähigt ist, sich kontinuierlich oder hin- und hergehend zu bewegen und dabei einem zu sägenden Werkstück (14) aufliegt, das seinerseits auf einem Träger (4) liegt, mit Organen (5) zur Ermittlung der Querlage der benannten Zylinder relativ zu dem benannten, zu sägenden Werkstück sowie mit Organen für eine Steuerung der benannten Zylinder (1) und/oder des benannten Trägers (4), wobei diese Steuerorgane mit den benannten Organen (5) zur Lageermittlung zusammenwirken, und zwar so, dass die relative Lage der Drahtführungszylinder und des zu sägenden Werkstücks durch Kompensation unverändert gehalten wird, dadurch gekennzeichnet, dass die Steuerorgane thermisch auf die benannten Zylinder und/oder auf den benannten Träger wirken, indem sie deren bzw. dessen Temperatur definieren.

2. Vorrichtung zum Sägen gemäss Anspruch 1, dadurch gekennzeichnet, dass jeder Drahtführungszylinder (1) auf einer Seite auf einem Lager befestigt ist, das in Querrichtung zu dem zu sägenden Werkstück unbeweglich ist, dass die Organe (5) zur Lageermittlung mit dem anderen, freien Lager des benannten Zylinders zusammenwirken, und dass die Organe zur Temperatursteuerung aus einem Kreis zum Umlauf eines Temperaturregel-Fluids im Inneren jedes Zylinders (1) bestehen, der von den benannten Organen zur Lageermittlung gesteuert wird.

3. Vorrichtung zum Sägen gemäss Anspruch 1, dadurch gekennzeichnet, dass die Organe (5) zur Lageermittlung mit einem freien Querende des Trägers (4) des zu sägenden Werkstücks (14) zusammenwirken und dass dieser Träger einen Kreis zum internen Umlauf eines Temperaturregel-Fluids umfasst, der die benannten Organe zur Temperatursteuerung darstellt und von den benannten Organen zur Lageermittlung gesteuert wird.

4. Vorrichtung gemäss einem der Ansprüche 1 bis 3, dadurch gekennzeichnet, dass die Organe (5) zur Lageermittlung Elemente der kapazitiven oder induktiven Näherungsmessung, Elemente der optischen oder Ultraschallerkennung oder mechanische Fühler sind.
